**Europäisches Patentamt**

**European Patent Office**

**Office européen des brevets**

(19)

(11) Publication number: **0 042 375**
**B1**

(12) # EUROPEAN PATENT SPECIFICATION

(45) Date of publication of patent specification: **23.05.84**

(51) Int. Cl.³: **B 65 D 81/26, A 01 G 27/00**

(21) Application number: **80900093.8**

(22) Date of filing: **21.12.79**

(86) International application number:
**PCT/SE79/00256**

(87) International publication number:
**WO 81/01825 09.07.81 Gazette 81/16**

(54) **Container with capillary grooves.**

(43) Date of publication of application:
**30.12.81 Bulletin 81/52**

(45) Publication of the grant of the patent:
**23.05.84 Bulletin 84/21**

(84) Designated Contracting States:
**DE GB NL**

(56) References cited:
**SE-A-78 119 245**
**US-A-3 209 978**

(73) Proprietor: **JÖLNER, Jörgen Vagn**
**Svedjan**
**S-517 00 Bollebygd (SE)**

(72) Inventor: **JÖLNER, Jörgen Vagn**
**Svedjan**
**S-517 00 Bollebygd (SE)**

(74) Representative: **Ström, Tore et al**
**c/o Ström & Gulliksson AB Rundelsgatan 14**
**S-211 36 Malmö (SE)**

Courier Press, Leamington Spa, England.

## Description

The present invention relates to an arrangement in containers, such as a trough or a pot, with bottom and side walls.

The packing of pieces of meat for sale in supermarkets often takes place in small trays which are then wrapped in plastics foil so that the package is well closed and can be handled and felt without being damaged, in order to meet the hygienic requirements. The tray, which is generally made of plastic, gives stability to the packing. When the meat lies in the packing, it may tend to bleed and if the juice can then run around in the packing this will get an unaesthetic appearance while at the same time there is a risk that the juice may ooze out of the packing. The document US—A—3209978 discloses an absorbent material, for example a sheet of porous paper (cellulose) at the bottom of the tray, this material being stuck on to the bottom so as always to be correctly located when the trays are delivered. The application of the absorbent material involves an appreciable additional expense for the packing, and this applied to a still greater extent to a more elaborate embodiment wherein the absorbent material is located between an outer and an inner tray secured together, the inner one of which has a perforated bottom.

With the object of binding any meat juice which may occur, in the finished packing, it is proposed, according to the invention, to arrange a container of the kind referred to above in the manner appearing from the characterizing clause of claim 1.

This arrangement of a container, provided primarily for the trays which are used in self-service packings for meat, also opens up the possibility of another use. While the channel-shaped grooves arranged as capillaries suck away liquid at the bottom of the container when the container is included in such a packing, it is conceivable in other cases that these capillaries might be used to suck liquid in the other direction, which presupposes that their boundary wall is perforated. This function is conceivable in connection with plastics flowerpots which stand in nutrient solution, in order that the root system shall suck up nutrient therefrom.

To illustrate the invention this will be described in more detail below, reference being made to the accompanying drawing in which

FIG. 1 is a perspective view of a tray which is constructed according to the invention,

FIG. 2 is a cross-sectional view, taken transversely of the channel-shaped grooves arranged at the bottom of the tray, and

FIG. 3 is an axial cross-sectional view of a flowerpot which is constucted according to the invention and stands in a tray in which a nutrient solution circulates.

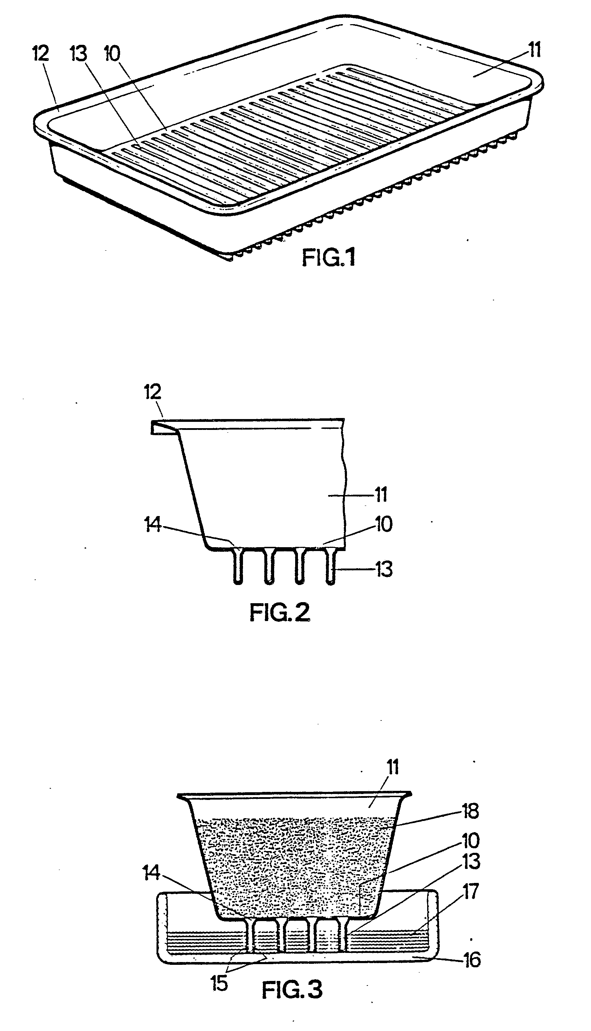

The tray shown in the drawing in FIGS. 1 and 2 is made of thin plastics foil, for example 0.25 mm thick, and comprises a bottom 10 and side walls 11, an encircling brim 12 being formed on the side walls at an angle of about 15°.

The tray is rectangular, and arranged in parallel to the short sides thereof are a number of channel-shaped grooves 13 which open into the container and are closed at the bottom and at the ends. The grooves are very narrow — their internal width may be of the order of 0.3—0.5 mm — in order that the grooves shall act as capillaries. Their depth can be between 5 and 10 mm while the spacing between them is about 5 mm. At the top, the channels widen out towards the mouth thereof in that they form a portion 14 which has side walls diverging towards the mouth.

When the tray described is used in a meat packing of the kind described above, meat juice, which originates from the packed piece of meat, runs down, at the bottom 10 of the tray, into the widened portions 14 of the channel-shaped grooves 13 to be sucked down in the grooves by the capillary action thereof. Because of the widened portions 14 of the channel-shaped grooves the capillary action exerted by the grooves, the meat juice will be drawn completely down into the capillary portion of the grooves from the widened portion 14 and thus will be scarcely visible at the top side of the bottom. A large number of channel-shaped grooves provide a large volume for sucking up the meat juice.

The grooves also cause a stiffening of the tray, so that this obtains the necessary stability even if it is made of very thin plastics foil.

The tray described can easily be produced by hot-forming of a thin plastics foil over a positive mould.

The flowerpot shown in FIG. 3 is made in the same manner as the tray of FIGS. 1 and 2, but in this case the side walls of the channel-shaped grooves 13 are perforated as indicated at 15. The pot stands in a channel 16 in which nutrient solution 17 is circulated and as a result of the fact that the perforations 15 are in the nutrient solution the channel-shaped grooves can suck up nutrient solution by capillary action, so that this nutrient solution is supplied to an absorbent bed 18 in which a plant can be planted. In this manner a controlled supply of nutrient solution to the plant can easily be arranged.

The container can be given another shape than that shown here and so far as the channel-shaped grooves with capillary action are concerned, these can be varied in shape, number, size and spacing.

## Claims

1. An arrangement in containers, such as a tray or a pot, with a bottom (10) and side walls (11), characterized in that the bottom (10) is formed with a number of very narrow channel-shaped grooves (13) with capillary action, which open into the container.

2. An arrangement as claimed in claim 1, characterized in that the grooves (13) have an internal widths in the range of tenths of a mm.

3. An arrangement as claimed in claim 1 or 2, characterized in that the channels (13) have a widened mouth portion (14).

4. An arrangement as claimed in claim 3, characterized in that the mouth portion (14) has side walls diverging towards the mouth.

5. An arrangement as claimed in any of claims 1 to 4, characterized in that the grooves (13) have a depth of 5 to 10 mm.

6. An arrangement as claimed in one of claims 1 to 5, characterized in that perforations (15) are provided in the boundary walls of the grooves (13).

7. An arrangement as claimed in claim 6, characterized in that the perforations (15) are provided in the side walls of the grooves (13) near the bottom of the grooves.

8. An arrangement as claimed in any of claims 1 to 7, characterized in that the grooves (13) consist of straight grooves.

## Revendications

1. Agencement dans des conteneurs, tels qu'un plateau ou un récipient, avec un fond (10) et des parois latérales (11), caractérisé en ce que le fond (10) comporte un certain nombre de rainures (13) en forme de canal très étroit, ayant un effet de capillarité, qui débouchent dan le conteneur.

2. Agencement selon la revendication 1, caractérisé en ce que les rainures (13) ont une largeur intérieure de l'ordre de quelques dixièmes de millimètre.

3. Agencement selon la revendication 1 ou 2, caractérisé en ce que les rainures (13) ont une partie d'embouchure élargie (14).

4. Agencement selon la revendication 3, caractérisé en ce que la partie d'embouchure (14) comporte des parois latérales qui divergent vers l'embouchure.

5. Agencement selon l'une quelconque des revendications 1 à 4, caractérisé en ce que les rainures (13) ont une profondeur de 5 à 10 mm.

6. Agencement selon l'une quelconque des revendications 1 à 5, caractérisé en ce que des perforations (15) sont pratiquées les parois formant les délimitations des rainures (13).

7. Agencement selon la revendications 6, caractérisé en ce que les perforations (15) sont pratiquées dans les parois des rainures (13) près de leur fond.

8. Agencement selong l'une quelconque des revendications 1 à 7, caractérisé en ce que les rainures (13) sont des rainures rectilignes.

## Patentansprüche

1. Vorrichtung an Behältern, z.B. eine Schale oder ein Topf, mit einem Boden (10) und Seitenwänden (11), dadurch gekennzeichnet, dass der Boden (10) mit einer Anzahl von sehr schmalen kanalförmigen Rillen (13) mit Kapillarkaft versehen ist, die sich in den Behälter hin öffen.

2. Vorrichtung nach Anspruch 1, dadurch gekennzeichnet, dass Rillen (3) eine Lichtweite von der Grösse eines Zehntelmillimeters aufweisen.

3. Vorrichtung nach Anspruch 1 oder 2, dadurch gekennzeichnet, dass Rillen (13) einen erweiterten Mündungsabschnitt (14) aufweisen.

4. Vorrichtung nach Anspruch 3, dadurch gekennzeichnet, dass der Mündungabschnitt (14) zu Mündung hin divergierende Seitenwände aufweist.

5. Vorrichtung nach einem der Ansprüche 1—4 dadurch gekennzeichnet, dass die Rillen (13) eine Tiefe von 5—10 mm aufweisen.

6. Vorrichtung nach einem der Ansprüche 1—5, dadurch gekennzeichnet, dass die Begrenzungswände der Rillen (13) mit Durchbohrungen (15) versehen sind.

7. Vorrichtung nach Anspruch 6, dadurch gekennzeichnet, dass die Durchbohrungen (15) in den Seitenwänden der Rillen (13) nahe am Boden angeordnet sind.

8. Vorrichtung nach einem der Ansprüche 1—7, dadurch gekennzeichnet, dass die Rillen (13) gerade ausgestaltet sind.

0 042 375

FIG.1

FIG.2

FIG.3